# EUROPÄISCHE PATENTANMELDUNG

(11) **EP 0 973 349 A2**
(43) Veröffentlichungstag der Anmeldung: **19.01.2000**
(21) Anmeldenummer: 99113055.0
(22) Anmeldetag: 01.07.1999
(51) Int. Cl.: H04Q 7/38

(54) **Rufen einer Mobilstation mit mehrere Teilnehmerkennungen durch Rundfunk**

(30) Priorität: 13.07.1998 DE 19831345
(71) Anmelder: SIEMENS AKTIENGESELLSCHAFT, 80333 München (DE)
(72) Erfinder: Menzel, Christian, Dr., 82216 Maisach (DE)

(57) **Zusammenfassung**

Erfindungsgemäß wird der Mobilstation eine geräteabhängige Kennung und zumindest eine Teilnehmerkennung zugewiesen, wobei die geräteabhängige Kennung und die zumindest eine Teilnehmerkennung netzseitig und in der Mobilstation gespeichert sind. Für einen Verbindungsaufbau wird eine Gruppenrufnachricht zusammengestellt, die auf der geräteabhängigen Kennung basiert. Im Gegensatz zu bisher üblichen Verfahren wird also nicht der Teilnehmer, bezeichnet durch seine Teilnehmerkennung, sondern die Mobilstation unabhängig von evtl. mehreren Teilnehmerkennungen gerufen. Die Gruppenrufnachricht wird anschließend von der Basisstation zur Mobilstation gesendet. Bei mehreren Teilnehmerkennungen pro Mobilstation wird damit der Signalisierungsaufwand beim Rufen und der Batterieverbrauch der Mobilstation verringert.

## Beschreibung

Die Erfindung betrifft ein Verfahren und ein Funk-Kommunikationssystem zum Rufen einer Mobilstation, insbesondere für Mobilstationen mit mehreren Teilnehmerkennungen.

In Funk-Kommunikationssystemen ist zumindest ein Teil eines Nachrichtenkanals zwischen zwei Teilnehmern, die eine Nachrichtenverbindung unterhalten, eine Funkschnittstelle. Ein typisches Beispiel für ein Funk-Kommunikationssystem ist das GSM-Mobilfunksystem (global system for mobile communications). Über die Funkschnittstelle werden Informationen (beispielsweise Sprache, Bildinformationen, Internet-Nachrichten oder andere Daten) mit Hilfe von elektromagnetischen Wellen zwischen einer sendender und einer empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TDMA/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Eine Mobilstation ist ein Teilnehmerendgerät, dessen Mobilität im Funk-Kommunikationssystem dadurch ermöglicht wird, daß ein Einbuchen in beliebigen Funkzellen des Funk-Kommunikationssystems erfolgen kann. Das Einbuchen erfolgt entweder auf Veranlassung der Mobilstation oder nach einem Rufen durch eine Basisstation, die durch das Rufen (paging) herausfindet, ob sich die gerufene Mobilstation in ihrer Funkzelle aufhält. Die gerufene Mobilstation antwortet auf einen sie betreffenden Ruf durch eine Quittierung gegenüber dem Netz. Nach der Quittierung kann netzseitig der Aufenthaltsbereich der Mobilstation aktualisiert werden.

Im GSM-Mobilfunksystem, siehe J.Biala, 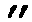 Mobilfunk und intelligente Netze", Vieweg Verlag, 1995, S.257, wird jedoch nicht für jede Mobilstation ein individueller Ruf zusammengestellt, sondern sogenannte Rufgruppen gebildet. Die Mobilstationen einer Rufgruppe werden mittels einer Gruppenrufnachricht zu einer Quittierung aufgefordert. Anhand der Quittierung kann netzseitig wiederum festgestellt werden, ob sich die gesuchte Mobilstation der Rufgruppe ebenfalls gemeldet hat.

Durch das Bilden von Rufgruppen wird der Signalsierungsaufwand beträchtlich verringert. Im GSM-Mobilfunksystem wird die Zuordnung einer Mobilstation zu einer Rufgruppe aus einer Teilnehmerkennung, z.B. der IMSI (international mobile subscribern identity), abgeleitet, die sich daraus ergibt, daß der Teilnehmer bei einem Netzbetreiber einem Dienst abonniert hat. Die Teilnehmerkennung wird üblicherweise auf einer SIM-Karte gespeichert (SIM subscriber identification module), wobei ein Teilnehmer z.B. für den privaten und dienstlichen Gebrauch mehrere solcher Teilnehmerkennungen hat, die er wahlweise benutzen kann.

Mit jeder zusätzlichen Teilnehmerkennung ist die Mobilstation gezwungen, weitere Rufgruppen zu überwachen, da die unterschiedlichen Teilnehmerkennungen nur zufälligerweise in die gleiche Rufgruppe fallen. Ohne daß die Zahl der Mobilstationen sich erhöht, steigt der netzseitige Signalisierungsaufwand zum Rufen der Teilnehmer und der Überwachungsaufwand für eine Mobilstation.

Der Erfindung liegt daher die Aufgabe zugrunde, ein Verfahren und ein Funk-Kommunikationssystem anzugeben, die den netzseitigen Signalisierungsaufwand zum Rufen der Teilnehmer verringern. Diese Aufgabe wird durch das Verfahren mit den Merkmalen des Anspruchs 1 und das Funk-Kommunikationssystem mit den Merkmalen des Anspruchs 12 gelöst. Vorteilhafte Weiterbildungen sind den Unteransprüchen zu entnehmen.

Erfindungsgemäß wird der Mobilstation eine geräteabhängige Kennung und zumindest eine Teilnehmerkennung zugewiesen, wobei die geräteabhängige Kennung und die zumindest eine Teilnehmerkennung netzseitig und in der Mobilstation gespeichert sind. Für einen Verbindungsaufbau wird eine Gruppenrufnachricht zusammengestellt, die auf der geräteabhängigen Kennung basiert. Im Gegensatz zu bisher üblichen Verfahren wird also nicht der Teilnehmer, bezeichnet durch seine Teilnehmerkennung, sondern die Mobilstation unabhängig von evtl. mehreren Teilnehmerkennungen gerufen. Die Gruppenrufnachricht wird anschließend von der Basisstation zur Mobilstation gesendet.

Ist die Anzahl der Teilnehmerkennungen größer als die der Mobilstationen, so sinkt der Signalsierungsaufwand im Funk-Kommunikationssystem. Sieht die Mobilstation nur während einer eingeschränkten, einer bestimmten Rufgruppe zugeordneten Zeitspanne eine Empfangsbereitschaft vor, so ist auch der Überwachungsaufwand und damit in der Regel der Energieverbrauch in der Mobilstation geringer, falls mehrere Teilnehmerkennungen der Mobilstation zugewiesen sind.

Nach einer vorteilhaften Weiterbildung der Erfindung ist die geräteabhängige Kennung von einem internationalen Mobilstationsidentitätswert abgeleitet, z.B. IMEI (international mobile station equipment identity). Der internationale Mobilstationsidentitätswert wird im GSM-Mobilfunksystem zu Identifizierung und Sperrung von gestohlenen Mobilstationen verwendet. Da dieser Wert eine Mobilstation genau bezeichnet, eignet er sich auch für das Rufen der Mobilstation entsprechend der Erfindung.

Eine alternative Möglichkeit zur Ableitung der geräteabhängigen Kennung beruht auf einer Zufallszahl, die entwender in der Mobilstation oder im Netz erzeugt wird. Der jeweiligen Gegenseite wird diese Zufallszahl per Signalisierung mitgeteilt. Diese Zufallszahl gestattet eine flexible Zuordnung der Mobilstationen zu Rufgruppen.

So ist es vorteilhaft, daß die Zufallszahl einem Wertebereich kleiner oder gleich der Anzahl von möglichen unterschiedlichen Rufgruppen für die Gruppenrufnachrichten entnommen wird. Die Zuordnung zwischen Zufallszahl und Rufgruppe ist damit ohne weitere Umrechnungen eindeutig.

Weiterhin ist es vorteilhaft, daß die geräteabhängige Kennung abhängig von der Belegung der unterschiedlichen Rufgruppen für die Gruppenrufnachrichten vergeben wird. Damit kann aktiv darauf Einfluß genommen werden, daß alle Rufgruppen gleichmäßig belegt sind und damit die Wahrscheinlichkeit von Kollisionen bei der Quittierung gering bleibt oder daß bestimmte Mobilstationen durch eine mehrfache Zuordnung zu Rufgruppen häufiger gerufen werden.

Eine weitere vorteilhafte Ausbildung der Erfindung sieht vor, daß die geräteabhängige Kennung derartig vergeben wird, daß die Anzahl von Aussendungen einer Gruppenrufnachricht in mehreren Rufgruppen etwa gleich ist. Hiermit wird bereits berücksichtigt, daß bestimmt Mobilstationen häufiger gerufen werden als andere, z.B. bedingt durch Dienste, die einen in kurzen Abständen erfolgenden Verbindungsaufbau erfordern. Durch die Weiterbildung werden auch die übrigen Mobilstationen dieser Rufgruppe nicht unnötig zur Überwachung der Gruppenrufnachrichten gezwungen.

Die Erfindung führt insbesondere dann zu den geschilderten Vorteilen, wenn der Mobilstation mehrere Teilnehmerkennungen zugewiesen werden. Dies ist in zukünftigen Funk-Kommunikationssystemen mit einer Vielzahl unterschiedlicher Dienste, die auch von unterschiedlichen Netz- oder Dienstbetreibern angeboten werden, zu erwarten. Die Zuordnung von Teilnehmerkennungen zu Mobilstationen kann dezentral in einem Besucherregister oder zentral in einem Heimregister erfolgen. Die dezentrale Lösung benötigt weniger Signalisierungsaufwand zum Zusammenstellen der Gruppenrufnachricht, währenddessen die zentrale Lösung eine leichtere Administrierung der Zuordnung ermöglicht.

Im folgenden wird die Erfindung anhand von Ausführungsbeispielen bezugnehmend auf zeichnerische Darstellungen näher erläutert.

Dabei zeigen
- Fig 1: ein Blockschaltbild eines Mobilfunksystems,
- Fig 2, 3: Zuordnungen von Teilnehmerkennungen zu einer Mobilstation in der Mobilstation, und
- Fig 4, 5: Zuordnungen von Teilnehmerkennungen zu einer Mobilstation im Netz.

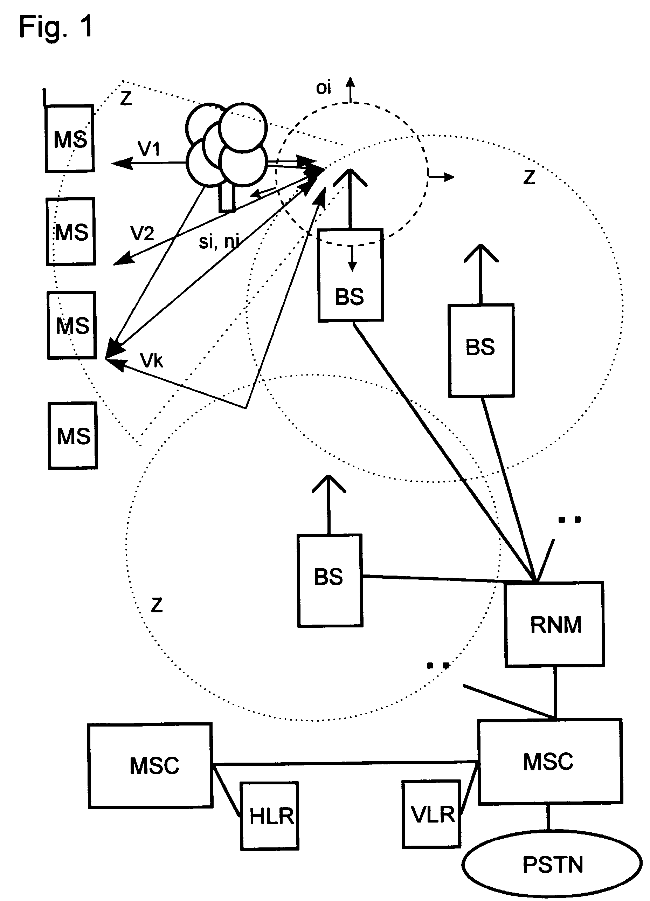

Das Mobilfunksystem als Beispiel eines Funk-Kommunikationssystems nach Fig 1 besteht aus einer Vielzahl von Mobilvermittlungsstellen MSC, die untereinander vernetzt sind bzw. den Zugang zu einem Festnetz PSTN herstellen. In mit den Mobilvermittlungsstellen MSC verbundenen Registern HLR, VLR, die als Besuchs- bzw. Heimregister ausgebildet sind, werden endgeräte- und teilnehmerindividuelle Daten gespeichert, die die Mobilität unterstützten. Weiterhin sind die Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS.

Eine solche Basisstation ES kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Die Einrichtung RNM zum Zuteilen von funktechnischen Ressourcen und mehrere Basisstationen BS bilden ein Basisstationssystem.

In Fig 1 sind Verbindungen V, beispielhaft als V1, V2, Vk bezeichnet, zur Übertragung von Nutzinformationen ni und Signalisierungsinformationen si zwischen Mobilstationen MS und einer Basisstation BS dargestellt. Die Übertragung von Organisationsinformationen oi erfolgt an mehrere Mobilstationen MS in Form einer Punkt-zu-Multipunkt-Verbindung.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

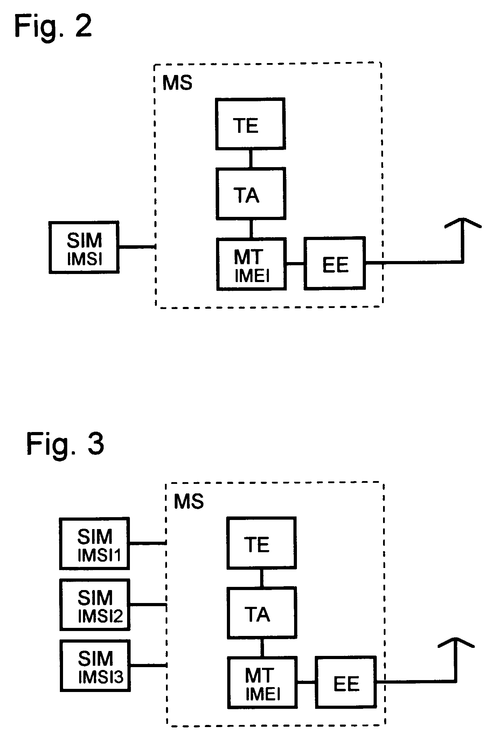

Eine Mobilstation MS nach Fig 2 enthält ein Peripheriegerät TE zum Bereitstellen bestimmter Dienste für den Teilnehmer, eine Adaptereinheit TA, die die Verbindung zu einem Speisegerät MT für die Mobilstation MS herstellt, und eine Empfangeinrichtung EF, die gesendete Gruppenrufnachrichten empfängt und auswertet - siehe dazu J.Biala, 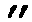 Mobilfunk und intelligente Netze", Vieweg Verlag, 1995, S.112 - 116. Diese Komponenten bilden den Teil der Mobilstation MS, der keine teilnehmerspezifischen Elemente enthält. Eine Teilnehmerkennung IMSI ist auf einem Teilnehmermodul SIM gespeichert, der an die übrige Schaltungstechnik angeschlossen werden kann.

Durch die Teilnehmerkennung IMSI ist auch eine vertragliche Beziehung zwischen dem Teilnehmer und einem Netz- bzw. Dienstbetreiber bezeichnet. Ein solcher Vertrag berechtigt zur Benutzung von bestimmten Diensten (Sprach-, SMS- und in Zukunft auch Video-, Internet- und diverse Datendienste).

Unterhält der Teilnehmer mehrere vertragliche Beziehungen - siehe Fig 3 - zu einem oder mehreren Netz- bzw. Dienstbetreibern, so tritt der Teilnehmer gegenüber dem Netz nicht mehr als einer sondern als entsprechend den unterschiedlichen vergebenen Teilnehmerkennungen IMS1, IMSI2, IMSI3 als mehrere Teilnehmer in Erscheinung. Die Teilnehmerkennungen sind auf unterschiedlichen Modulen SIM gespeichert. Alternativ kann ein Modul jedoch auch mehrere Teilnehmerkennungen IMS1, IMSI2, IMSI3 aufnehmen.

Unabhängig von der Anzahl von Teilnehmerkennungen IMSI ist pro Mobilstation MS nur eine geräteabhängige Kennung IMEI vergeben. Einer Mobilstation MS sind folglich eine geräteabhängige Kennung IMEI und eine oder mehrere Teilnehmerkennungen IMSI, IMSI2, IMSI3 zugewiesen, die in der Mobilstation MS aber auch netzseitig gespeichert sind.

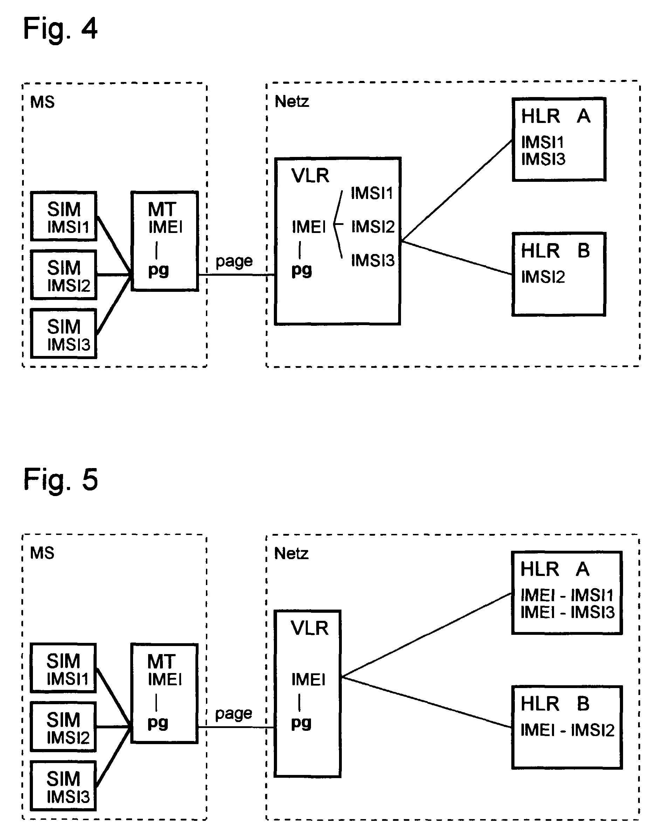

Netzseitig kann die Zuordnung von geräteabhängiger Kennung IMEI zu den Teilnehmerkennungen IMS1, IMSI2, IMSI3 zentral - siehe Fig 4 - oder dezentral - siehe Fig 5 - erfolgen. Bei der zentralen Lösung sind im Besuchsregister VLR sowohl die geräteabhängige Kennung IMEI als auch die Teilnehmerkennungen IMS1, IMSI2, IMSI3 und deren Zuordnung gespeichert. In den Heimatregistern HLR A und HLR B von zwei unterschiedlichen Netzbetreibern sind dann nur die Teilnehmerkennungen IMS1, IMSI2, IMSI3 der bei ihnen abonnierten Teilnehmer gespeichert. Bei der dezentralen Lösung ist im Besuchsregister VLR nur die geräteabhängige Kennung IMEI gespeichert, währenddessen in den Heimregistern HLR A und HLR B die Zuordnung zwischen geräteabhängiger Kennung IMEI und den Teilnehmerkennungen IMS1, IMSI2, IMSI3 gegeben ist.

Zum Rufen einer Mobilstation MS werden Rufgruppen pg mit mehreren Mobilstation MS gebildet, wobei die Zuordnung einer Mobilstation MS zu einer Rufgruppe pg auf der geräteabhängigen Kennung IMEI basiert. Ausgehend von der geräteabhängigen Kennung IMEI wird in einer Einrichtung zum Zusammenstellen der Gruppenruffnachricht page, z.B. dem Basisstationscontroller BSC oder der Basisstation BS, für eine Rufgruppe pg eine Gruppenrufnachricht page generiert, wenn ein Mitglied, d.h. eine geräteabhängige Kennung IMEI der Rufgruppe pg, für einen netzseitigen Verbindungsaufbau gerufen werden soll.

Die Gruppenrufnachricht page wird zu einer oder mehreren Basisstationen BS weitergeleitet oder von den Basisstationen BS gesendet. Die Mobilstation MS ist im inaktiven Zustand nur während eingeschränkter, einer bestimmten Gruppenrufnachricht page zugeordneten Zeitspanne empfangsbereit. Damit ist der Energieverbrauch der Mobilstation MS gering und trotzdem bleibt die Mobilstation MS ständig erreichbar.

Hält sich auch die Mobilstation MS mit der zugewiesenen geräteabhängigen Kennung IMEI in der Funkzelle auf, so quittiert sie die Gruppenrufnachricht page und weitere Prozeduren zum Verbindungsaufbau können mittels Signalisierungsnachrichten zwischen Netz und Mobilstation MS durchgeführt werden. Im Netz wird weiterhin der Aufenthaltsbereich der Mobilstation MS für ein späteres Rufen aktualisiert.

Die geräteabhängige Kennung IMEI entspricht im einfachsten Fall der sogenannten 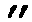 international mobile station equipment identity", die die Typzulassung und Fertigungsnummer angibt. Die Daten zur IMEI werden bereits in einer EIR-Datenbank (Gerätedatenbank) verwaltet, um gestohlene oder defekte Mobilstationen MS sperren und lokalisieren zu können. Andere Verwendungen der IMEI zur Authentifizierung der Mobilstation MS sind zusätzlich möglich.

Alternativ zur Benutzung dieser bekannten Kennung kann auch eine Zufallszahl IMEI generiert werden, die ein geräteindividuelles Rufen gestattet. Die Zufallszahl wird entweder in der Mobilstation MS oder im Netz bestimmt und der Gegenseite während der Einbuchung oder einer Aufenthaltsaktualisierung signalisiert. Der Wertebereich der Zufallszahlen entspricht der Anzahl der Rufgruppen pg.

Bei der Vergabe der Zufallszahlen wird darauf geachtet, daß alle Rufgruppen standardmäßig derart belegt sind, daß alle Mobilstationen MS mit gleicher Häufigkeit gerufen werden und die Wahrscheinlichkeit von Kollisionen bei der Quittierung in einem Zugriffskanal mit zufälligen Zugriff gleichgroß ist. Dabei kann entsprechend einer Priorisierung manchen Mobilstationen MS jedoch eine größere Rufhäufigkeit bzw. eine bessere Quittierungsexklusivität zugewiesen werden, die für manche Dienste benötigt wird. Aus DE 197 07 261 kann entnommen werden, wie anhand von teilnehmerspezifischen Profilen das Rufen einer Mobilstation entsprechend der benutzten Dienste individuell eingestellt werden kann.

## Patentansprüche

1. Verfahren zum Rufen einer Mobilstation (MS) in einem Funk-Kommunikationssystem, bei dem
der Mobilstation (MS) eine geräteabhängige Kennung (IMEI) und zumindest eine Teilnehmerkennung (IMSI) zugewiesen wird,
die geräteabhängige Kennung (IMEI) und die zumindest eine Teilnehmerkennung (IMSI) netzseitig und in der Mobilstation (MS) gespeichert sind,
für einen Verbindungsaufbau eine Gruppenrufnachricht (page) zusammengestellt wird, die auf der geräteabhängigen Kennung (IMEI) basiert, und
die Gruppenrufnachricht (page) von der Basisstation (BS) zur Mobilstation (MS) gesendet wird.

2. Verfahren nach Anspruch 1, bei dem
die geräteabhängige Kennung (IMEI) von einer internationalen Mobilstationsidentitätswert abgeleitet ist.

3. Verfahren nach Anspruch 1, bei dem
die geräteabhängige Kennung (IMEI) von einer Zufallszahl abgeleitet ist.

4. Verfahren nach Anspruch 3, bei dem
die Zufallszahl einem Wertebereich kleiner oder gleich der Anzahl von möglichen unterschiedlichen Rufgruppen (pg) für die Gruppenrufnachrichten (page) entnommen ist.

5. Verfahren nach einem der vorherigen Ansprüche, bei dem
die geräteabhängige Kennung (IMEI) abhängig von der Belegung von unterschiedlichen Rufgruppen (pg) für die Gruppenrufnachrichten (page) vergeben wird.

6. Verfahren nach einem der Ansprüche 1 bis 4, bei dem
die geräteabhängige Kennung (IMEI) derartig vergeben wird,
daß eine Anzahl von Aussendungen mit einer Gruppenrufnachricht (page) pro Rufgruppe (pg) etwa gleich ist.

7. Verfahren nach Anspruch 3, bei dem
die Zufallszahl in der Mobilstation (MS) bestimmt wird und
der Basisstation (BS) im Rahmen einer Einbuchung oder einer Aufenthaltsaktualisierung signalisiert wird.

8. Verfahren nach Anspruch 3, bei dem
die Zufallszahl netzseitig bestimmt wird und der Mobilstation (MS) im Rahmen einer Einbuchung oder einer Aufenthaltsaktualisierung signalisiert wird.

9. Verfahren nach einem der vorherigen Ansprüche, bei dem der Mobilstation (MS) mehrere Teilnehmerkennungen (IMSI1, IMSI2, IMSI3) zugewiesen werden.

10. Verfahren nach Anspruch 9, bei dem
die Zuordnung von Teilnehmerkennungen (IMSI1, IMSI2, IMSI3) zu Mobilstationen (MS) im Besucherregister (VLR) oder Heimregister (HLR) gespeichert ist.

11. Verfahren nach einem der vorherigen Ansprüche, bei dem die Mobilstation (MS) nur während eingeschränkter, einer bestimmten Gruppenrufnachricht (page) zugeordneten Zeitspanne empfangsbereit ist.

12. Funk-Kommunikationssystem
mit einer Mobilstation (MS), die ein Speisegerät (MT) und eine Empfangseinrichtung (EE) zum Empfangen von Gruppenrufnachrichten (page) enthält, wobei das Speisegerät (MT) zur Aufnahme eines Moduls (SIM) ausgebildet ist, so daß in der Mobilstation (MS) eine geräteabhängige Kennung (IMEI) und zumindest eine Teilnehmerkennung (IMSI) gespeichert sind,
mit einer Einrichtung zum Zusammenstellen einer Gruppenrufnachricht (page) für einen Verbindungsaufbau, die auf der geräteabhängigen Kennung (IMEI) basiert, und
mit einer Basisstation (BS) zum Senden der Gruppenrufnachricht (page) zur Mobilstation (MS).
